(19) Europäisches Patentamt
European Patent Office
Office européen des brevets

(11) **EP 1 696 223 B1**

(12) **EUROPÄISCHE PATENTSCHRIFT**

(45) Veröffentlichungstag und Bekanntmachung des Hinweises auf die Patenterteilung:
**06.05.2009 Patentblatt 2009/19**

(51) Int Cl.:
*G01N 15/14* *(2006.01)*      *G06T 7/00* *(2006.01)*

(21) Anmeldenummer: **06110055.8**

(22) Anmeldetag: **16.02.2006**

(54) **Verfahren zur Kornformbeschreibung von Partikeln aus photografisch erzeugten digitalen Bilddateien**

Method for describing the grain shape of particles from photographically produced digital image data

Procédé destiné à la description de la structure granuleuse de particules à partir d'images numériques produites par méthode photographique

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **25.02.2005 DE 102005008666**

(43) Veröffentlichungstag der Anmeldung:
**30.08.2006 Patentblatt 2006/35**

(73) Patentinhaber: **Haver & Boecker oHG**
**59302 Oelde (DE)**

(72) Erfinder:
• **Zlatev, Metodi**
**48165 Münster (DE)**

• **Schumann, Matthias**
**99427 Weimar (DE)**
• **Folgner, Thomas**
**09599 Freiberg (DE)**
• **Unland, Georg**
**09599, Freiberg (DE)**

(74) Vertreter: **Specht, Peter et al**
**Loesenbeck - Stracke - Specht - Dantz**
**Am Zwinger 2**
**33602 Bielefeld (DE)**

(56) Entgegenhaltungen:
**US-A- 4 183 013**      **US-A- 5 321 764**
**US-A1- 2002 164 063**      **US-A1- 2004 179 737**
**US-A1- 2005 089 191**

**Beschreibung**

Die Erfindung betrifft ein Verfahren zur Kornformbeschreibung von Partikeln aus photografisch erzeugten digitalen Bilddateien.

Bilddateien, die auf der Basis von optischen Bildaufnahmen erzeugt werden, sind zur Kornformbeschreibung rechnerisch weiterzuverarbeiten. Ein derartiges Verfahren ist z.B. aus der DE 41 19240 C2 bekannt. Diese Schrift zeigt auch den prinzipiellen Aufbau einer Vorrichtung zur Durchführung der Messungen. Als Digitalkamera dient hier ein CCD-Zeilensensor innerhalb einer Kamera, an dem ein Partikelstrom vorbeströmt. Eine Messapparatur nach Art der Fig. 2 der DE 41 19240 C2 kann prinzipiell auch im Rahmen der vorliegenden Erfindung eingesetzt werden.

Da für die Partikelformbeschreibung nur die Partikelrandkontur von Interesse ist, müssen die in statistischer Abbildungslage aufgenommenen Partikelprojektionsbilder bezüglich ihrer Randkontur (Randpixel) analysiert und bearbeitet werden. Dazu bedient man sich der Methode der Flächenerosion, die eine Einordnung in die Kategorien "Randpixel" und "Flächenpixel" vornimmt. Unter "Randpixeln" werden alle Pixel verstanden, die ein nicht abgedecktes Randpixel aufweisen. "Flächenpixel" sind die Pixel, die ausschließlich abgedeckte Nachbarpixel haben.

Nach Durchführung einer "korrekten" Bildaufnahme müssen die Erfordernisse der Bildbearbeitung näher betrachtet werden. Dabei sind digitale Partikelprojektionsbilder zu verwenden. Folgende wichtige Punkte sind zu bearbeiten:

- die Festlegung der Partikelrandkontur bzw. -koordinaten als Informationsträger für die weiteren Schritte der Kornformcharakterisierung;
- die Ermittlung wichtiger charakteristischer Parameter eines Partikels;
- der Einfluss der Partikelabbildungslage bei der Berechnung von Umfang und Sphärizität eines und
- die Überführung der ermittelten Randkonturinformation (X,Y-Koordinaten) in eine mathematisch auswertbare Form.

Nach der Ermittlung der X,Y-Koordinaten und der Festlegung der Partikelauswertelage sollen diese in eine rechnerisch auswertbare Form überführt werden, um gegenüber herkörmmlichen Formbeschreibungsmethoden verbesserte charakteristische Merkmale zu generieren.

In Hinsicht auf die Bildauswertung besteht dabei der Bedarf nach der Auswahl einer analytischen Transformation zur Ermittlung von Lösungskoeffizienten für die Kornforrncharakterisierung.

Zum Stand der Technik seien auch folgende Literaturhinweise gegeben.:

1. Jahne B.: Handbook of digital image processing for scientific applications. CRC Press, Boca Raton, Florida, (1997).
2. Huller, D.: Quantitative Formanalyse von Partikeln: Dissertation Technische Hochschule-Karlsruhe (1984).
3. NORM EN 933, Teil 4: Prüfverfahren für geometrische Eigenschaften von Gesteinskörnungen: Bestimmung der Kornform- Kornformkennzahl, Dezember (1999).
4. NORM EN 933, Teil 5: Prüfverfahren für geometrische Eigenschaften von Gesteinskörnungen: Bestimmung des prozentualen Anteils von gebrochenen Körnern in groben Gesteinskömungen, Februar (1998).

Aus der US-A-5 321 764 ist ein Verfahren zur Beschreibung der Kornform von Partikeln wie Weizenkörnern oder Keimzellen bekannt, bei dem mittels digitaler Bildaufnahmetechnik mittels einer Digitalkamera wird ein Bild eines Partikel- bzw. Komstroms aufgenommen und als digitalisierte Bilddatei zwischengespeichert, aus der Bilddatei wird für das zu beschreibende Partikel mittels einer Datenverarbeitungseinrichtung eine digitalisierte Projektionsfläche erzeugt, die Projektionsfläche in Flächenpixel und Randpixel getrennt wird und bei dem die Randpixel in x;y- Koordinaten überführt und die x;y Koordinaten ausgewertet werden.

Die US 2004/1797737 A1 offenbart ein Verfahren zur Konturgewinnung mittels Formbeschreibung mittels digitaler Aufnahmetechnik, wobei eine Punkt-Zug-Kurve zunächst von den X-,Y-Koordinaten der Randpixel erzeugt und dann ausgewertet wird, wobei diese Kurve eine Rand-kontur ist.

Die Erfindung hat die Aufgabe, ein verbessertes Verfahren zur Kornformbeschreibung von Partikeln aus photografisch erzeugten digitalen Bilddateien zu schaffen, das nur eine relativ geringe Rechenleistung benötigt und in bevorzugter Auslegung eine zuverlässige Aussage über die Makro- und/oder Meso- und/oder Mikrogestalt der Partikel erlaubt.

Die Erfindung löst diese Ausgabe durch den Gegenstand des Anspruchs 1.

Vorteilhafte Ausgestaltungen sind den Unteransprüchen zu entnehmen.

Aus den Lösungskoeffizienten können wiederum Aussagen über die Eigenschaften des Partikels getroffen werden können.

Die Punkt-/Zugkurve lässt sich mit einem minimalen Rechen- und Speicheraufwand erzeugen. Durch Verwendung der Randpixelkoordinaten bleiben die Informationen zur Partikelform und Abbildungslage für die weitere Bearbeitung erhalten.

Sodann ist es möglich, die normierten Lösungskoeffizienten auszuwerten, um in Abhängigkeit von der Ordnungszahl Aufschluss über die Makro-, Meso- und/oder Mikrogestalt zu erhalten.

Bevorzugt wird aus dem Koeffizient der 1. Ordnung die Makrogestalt bestimmt. So ist es vorteilhaft möglich, dass die Ermittlung bzw. Bestimmung der Makrogestalt durch das Länge/Breiten- Verhältnis erfolgt, wobei abnehmende 1. Koeffizienten auf ein größeres Länge/ Breite Verhältnis hindeuten.

Besonders bevorzugt wird aus den aufsummierten Koeffizienten der 0. -5. Ordnung die Mesogestalt bestimmt.

Als Nachweis der Relevanz der neuen Kornformbeschreibungsmethode wurden Korrelationsbetrachtungen mit relevanten Komformfaktoren wie z.B. Länge/Breite, Sphärizität durchgeführt.

Nach einer Variante erfolgt die Bestimmung der Mesogestalt durch die Sphärizität, wobei abnehmende Werte der aufsummierten Koeffizienten der 0. bis 5. Ordnung nach einer Variante der Erfindung als Hinweis auf asphärischere Partikel gewertet werden.

Besonders bevorzugt wird aus den aufsummierten Koeffizienten nach einer weiteren vorteilhaften Variante der Erfindung 5. - 16. Ordnung oder mehr, insbesondere 5.- 20. Ordnung, die Mikrogestalt bestimmt.

Diese Bestimmung bzw. Charakterisierung der Mikrogestalt erfolgt vorzugsweise durch die Rauhigkeitskennzahl $R_p$, die sich aus dem Verhältnis des Umfanges der realen Projektionsfläche und des Umfanges einer definierten Fläche gleichen Flächeninhaltes und gleicher Länge/Breite berechnet, wobei abnehmende Werte der aufsummierten Koeffizienten der 5. bis 20. Ordnung auf größere Rauhigkeiten hindeutet. Es hat sich gezeigt, dass durch die Rauhigkeitskennzahl $R_p$ sogar eine Prognostizierung der Bruchflächigkeit gemäß der Norm EN 933, Teil 5 [4] möglich ist.

Alternativ können die jeweils aufsummierten Koeffizienten zur Kennzeichnung von Makro-, Meso-, und Mikrogestalt auch anderen Auswertemethoden unterzogen werden.

Nachfolgend wird die Erfindung unter Bezug auf die Zeichnung näher beschrieben. Es zeigt:

Abb. 1    eine Darstellung, welche bekannte Randpunktabfrageprinzipien veranschaulicht;

Abb. 2    eine Darstellung, welche ein Verfahren zur Randkonturabtastung veranschaulicht;

Abb. 3    eine Hilfsmatrix, die einen Algorithmus zur Abtastung der Randkonturen (8- Richtungskode) nach Freemann veranschaulicht;

Abb. 4    eine Darstellung, welche Hauptschritte des neuen Randpixelabtastprinzips veranschaulicht;

Abb. 5    eine. Darstellung, die das "Drehen" eines Partikels veranschaulicht;

Abb. 6    eine Darstellung, welche das Prinzip der Radius- Winkel- Funktion veranschau- licht;

Abb. 7    eine grafische Darstellung der Ermittlung einer Punkt-Zug-Kurve;

Abb. 8    eine grafische Darstellung ausgewählter Korrelationsrechnungen zwischen $X_a/X_b$ und ausgewählte Fourierkoeffizienten nach der neue Methode (Realpartikel);

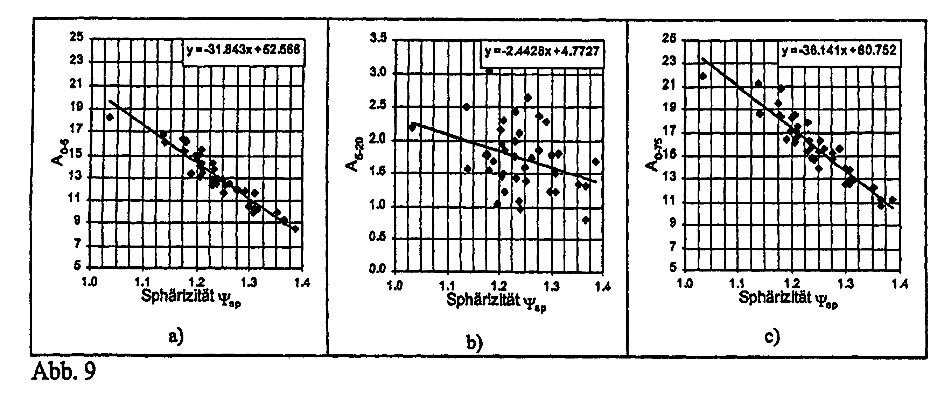

Abb. 9    ausgewählte Berechnungsergebnisse für die Korrelation zwischen der Sphärizität ($\Psi_{sp}$) und den Fourierkoeffizienten nach der neuen Methode (Realpartikel);

Abb. 10    einen Vergleich der Korrelationsergebnisse nach der neue Methode und der Radius-Winkel-Funktion zwischen ausgewählten Fourierkoeffizienten und $X_a/X_b$ (Realpartikel);

Abb. 11a    einen Vergleich der Korrelationsergebnisse nach der neuen Methode und der Radius-Winkel-Funktion zwischen ausgewählten Fourierkoeffizienten und der Sphärizität $\Psi_{sp}$ (Realpartikel);

Abb. 11b    Anforderungsgrenzen an die Aufnahmetechnik für die Korngrößen- und Formbe- stimmung (Pixelflächenanteil P, als Funktion der Pixelanzahl $n_g$);

Abb. 12    eine praktische Anwendung des Anforderungsprinzips für die Aufnahmetechnik bezüglich der Korngrößen- und -formbestimmung (Pixelkantenlänge als Funktion der Korngröße);

Abb. 13    einen Vergleich der Rauhigkeitskennzahlen $R_p$ von Modell- und Realpartikeln;

Abb. 14    eine Prognostizierung der Bruchflächigkeit gemäß EN 933, Teil 5 mit Hilfe der Rauhigkeitskennzahl $R_p$;

Abb. 15    ausgewählte Berechnungsergebnisse für die Korrelation zwischen der Rauhig- keitskennzahl $R_p$ und den Fourierkoeffizienten aus der neuen Methode (Realparti- kel); und

Abb. 16    einen Vergleich ausgewählter statistischer Untersuchungsergebnisse aus der neuen Methode und der Radius-Winkel-Funktion bezüglich der Rauhigkeitskennzahl $R_p$

Abb.17    (Realpartikel); und eine Übersicht über mathematische Grundlagen der Fourieranalyse zur Auswer- tung.

Nachfolgend sei das neue Verfahren zur Formbeschreibung eines Kornes beschrieben.

Zunächst ist festzustellen, dass zur Kornformbeschreibung die punktgenaue Beschreibung der Randkontur des Partikels unerlässlich ist.

Da für die Partikelformbeschreibung nur die Partikelrandkontur von Interesse ist, müssen die aufgenommenen Partikelprojektionsbilder bezüglich ihrer Randkontur (Randpixel) analysiert und bearbeitet werden. Dazu bedient man sich der Methode der Flächenerosion, die eine Einordnung in die Kategorien "Randpixel" und "Flächenpixel" vornimmt. Unter Randpixel werden alle Pixel verstanden, die mindestens ein nicht abgedecktes Pixel aufweisen. Flächenpixel sind die Pixel, die ausschließlich abgedeckte Nachbarpixel haben.

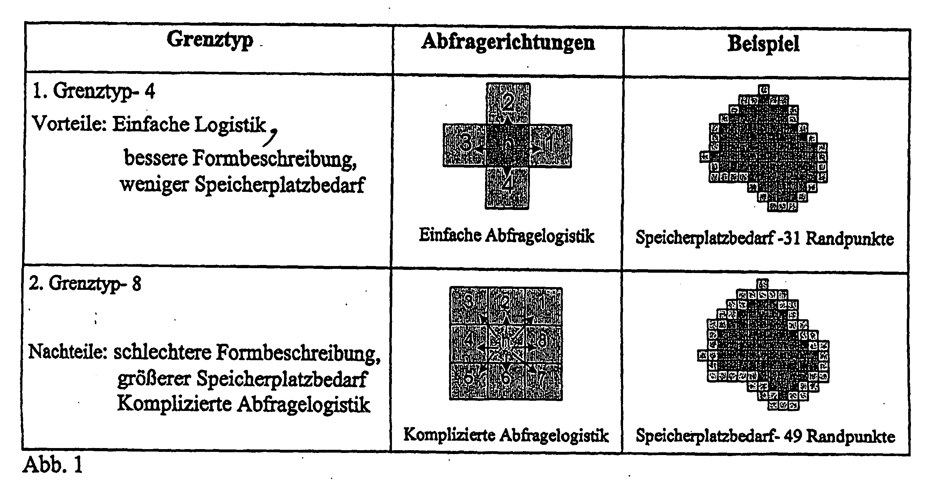

Zur Ermittlung der Randpixel existieren verschiedene Grenztypdefinitionen, die in zwei Grundprinzipien unterteilt werden können (siehe Abb. 1, die bekannte Randpunktabfrageprinzipien veranschaulicht). Es ist ersichtlich, dass der Typ 4 bezüglich der Freiheitsgrade für die Festlegung der Randpixel in der Bildmatrix günstiger zu verwenden ist als Grenztyp 8. Für die weiteren Bearbeitungsschritte wird daher Grenztyp 4 verwendet.

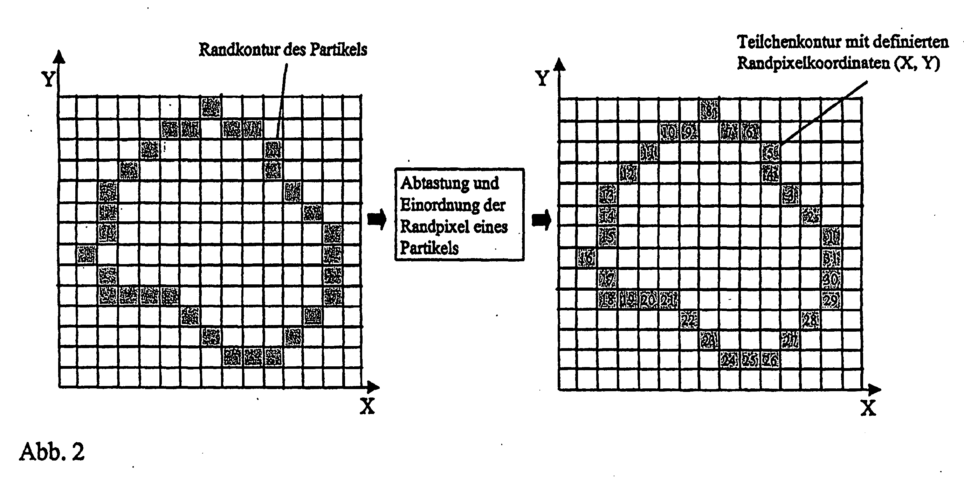

Im nächsten Bearbeitungsschritt wird ein Algorithmus entwickelt, der die Randpunktkoordinaten unter Annahme einer definierten Abtastmethode abfragt und die Randpixelkoordinaten in definierter Reihenfolge festlegt (s. Abb. 2, welche die grundlegende Methodik der Randkonturabtastung veranschaulicht.

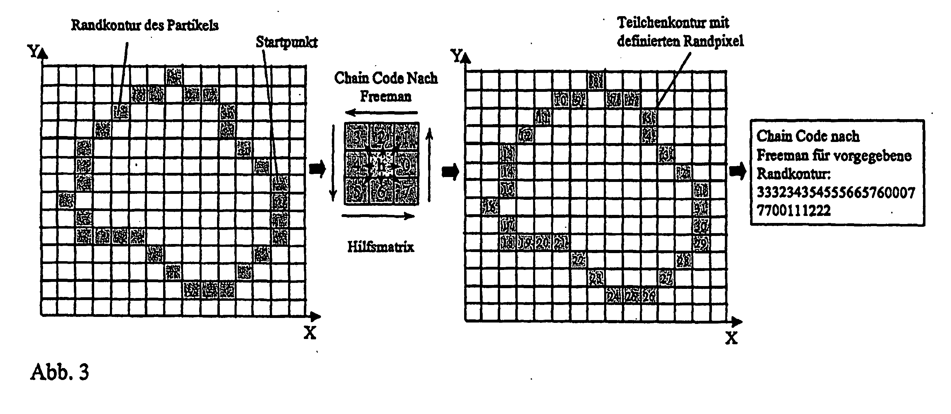

Aus der Literatur sind verschiedene Algorithmen zur Abtastung der Randkonturen bekannt. Am häufigsten wird der Chain- Code nach Freeman angewendet (Abb. 3). Die Grundidee zur Konturabtastung geht von folgendem Effekt aus: Jedes Randpixel h hat maximal 8 direkte Nachbarpixel (s. Hilfsmatrix in Abb. 3, die einen Algorithmus zur Abtastung der Randkonturen (8- Richtungskode) nach Freemann veranschaulicht) und eine Strecke (zwischen den Schwerpunkten von zwei Pixel) kann nur in eine von diesen 8 Richtungen verlaufen. Die Richtungen werden mit den Zahlen 0 bis 7 kodiert.

Aufgrund der komplizierten Abfrageroutine der verwendeten Hilfsmatrix zur Abtastung der Nachbarschaftspixel erfordert diese einen hohen Rechen- und Speicherplatzbedarf. Ein weiterer Nachteil ist, dass die Information über die Lage des Partikels schwieriger zu ermitteln ist.

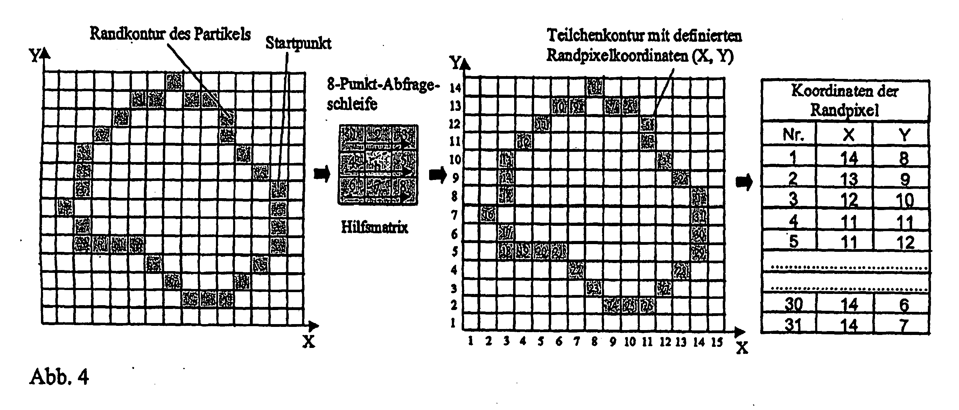

Daher wird ein neuer 8- Punkte- Abfragealgorithmus vorgeschlagen, der im folgenden näher erläutert wird (s. Abb. 4, welche Hauptschritte des neuen Randpixelabtastprinzips veranschaulicht). Nach Festlegung des Startpunktes und der Abtastrichtung erfolgt eine zeilenweise Abfrage mit anschließender Festlegung der Randpixelkoordinaten, die zur weiteren Bearbeitung tabellarisch erfasst werden.

Das neue Randpixelabtastprinzip hat folgende Vorteile gegenüber dem Chain- Code nach *Freeman:*

- Durch Abtastung der Hilfsmatrix mit einer Abfrageschleife kann der Rechen- und Speicheraufwand minimiert werden.
- Durch Verwendung der Randpixelkoordinaten bleiben die Informationen zur Partikelform und Abbildungslage für die weitere Bearbeitung erhalten.

Die Ergebnisse der Kornformanalyse von Teilchen (Teilchenprojektionen), die in einer statistischen Partikelaufnahmesystem aufgenommen werden, sind stark von der Abbildungslage der jeweilige Partikel beeinflusst. Unter Abbildungslage (Neigungswinkel soll der Winkel verstanden werden, der die größte Abmessung des Partikels mit der X- Achse bildet.

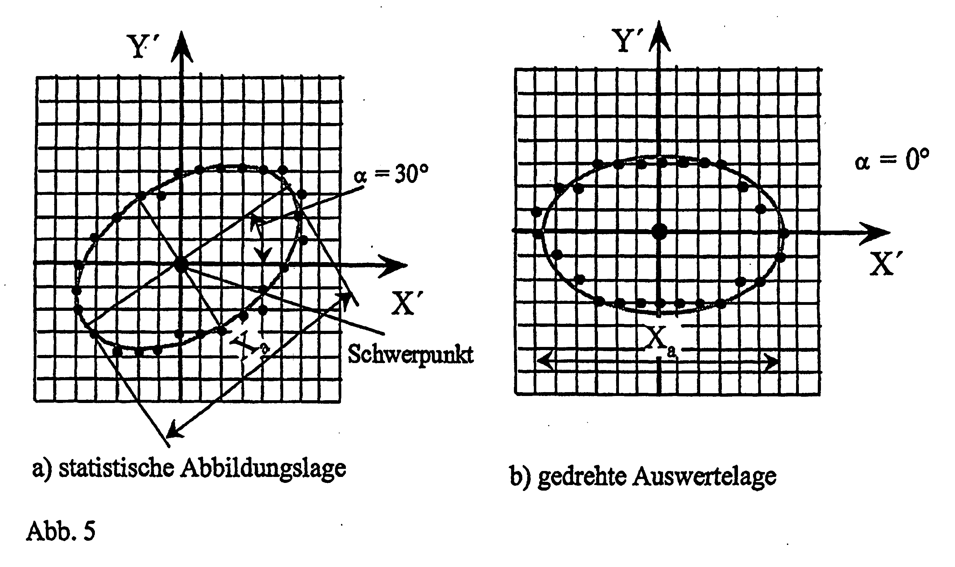

Zur Vermeidung des Einflusses der Abbildungslage wird jedes statistisch abgebildete Partikel für die Formbewertung in eine definierte Auswertelage gedreht. Abb. 5 veranschaulicht dieses Prinzip der Randkonturrotation zur Reduzierung der Rechenfehler bei der Formbeschreibung, das z.B. durch Rotation der Teilchenkontur (Teilchenkoordinaten) um seiner Schwerpunkt vor der Formbewertung realisiert werden kann. Bei dieser Rotation wurde die längste Partikelabmessung $X_a$ in eine Parallele mit der X'- Achse gebracht ($\alpha = 0$). Dadurch werden die Teilchen immer in einer vorher definierten Lage (unabhängig von der statistischen Abbildungslage) ausgewertet, was zu einer Reduzierung der Streuung führt.

Gegenwärtig erfolgt die mathematische Auswertung zur Gewinnung von Forminformationen aus der Rand- kontur von Partikelprojektionsbildflächen mit Hilfe der Radius- Winkel- Funktion, der Sehnen- Winkel- Funktion (Fraktale Dimension) oder der Tangenten- Winkel- Funktion.

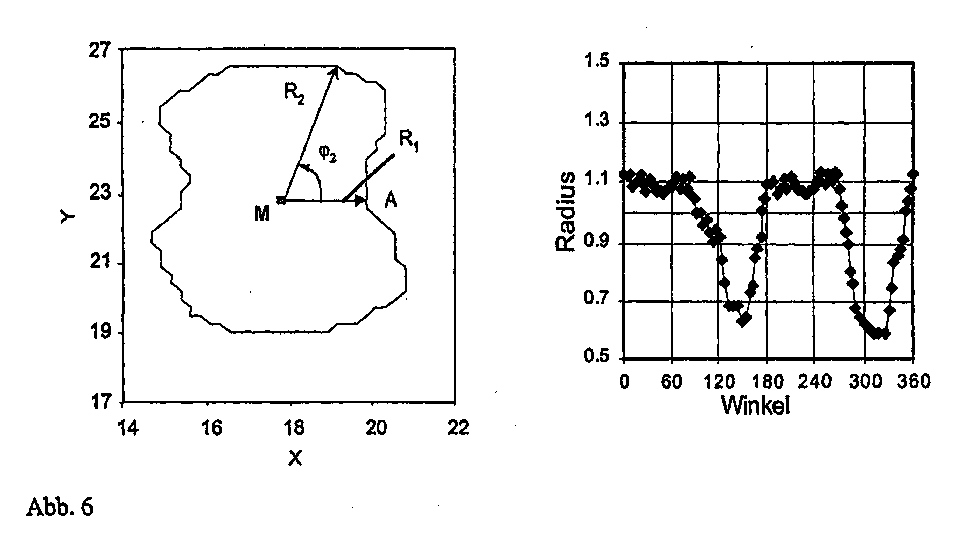

Die Vorgehensweise wird am Beispiel der Radius- Winkel- Funktion näher erläutert (siehe Abb. 6). Der Radius R wird auf den Radius des flächengleichen Kreises $R_0$ bezogen. Die Funktion $R/R_0 = f(\varphi)$ besitzt die Periode $2\pi$ und ist im rechten Teil dargestellt. Diese kann durch verschiedene analytische Funktionen (z.B. Fourierreihe) ausgewertet werden. Im Ergebnis erhält man als Träger der Forminformationen Fourierkoeffizienten, die je nach Ordnung die Makro-, Meso- und Mikrogestalt der Teilchenprojektionsfläche charakterisieren. Die Nachteile dieser mathematischen Formbeschreibungsfunktionen lassen sich wie folgt zusammenfassen:

- Startpunktproblematik: Die Wahl des Startpunktes auf der Teilchenkonturkurve beeinflusst den Abtastprozess, und die mathematische Analyse des Randkonturverlaufes. Bei der Radius-Winkel-Funktion ist die Definition des Startpunktes unbedingt notwendig.
- Komplexität des Konturabtastprinzips.
- Abtastproblematik bei Konkav/Konvex- Übergängen.
- Geringe Nachweisempfindlichkeit für Kornformänderungen.
- Große Streuung der Messergebnisse und schlechte Reproduzierbarkeit.

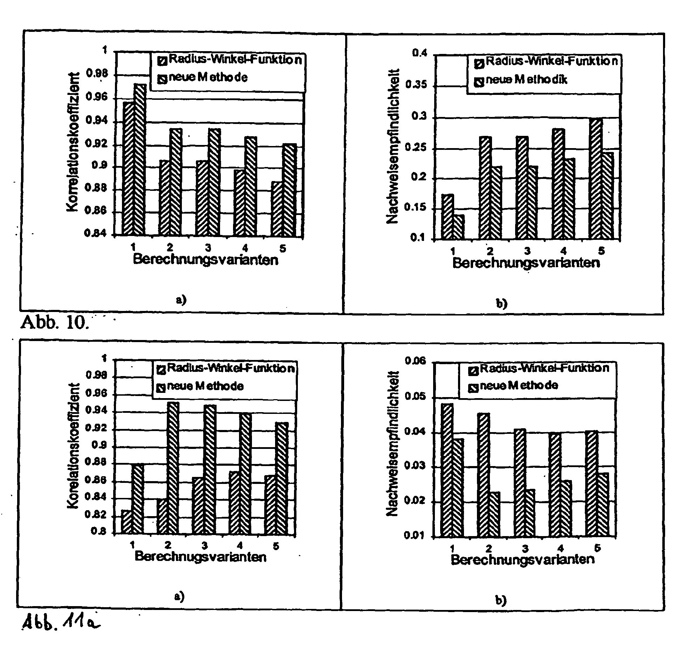

Die neue Punkt- Zug- Methode basiert auf der Abwicklung und Auswertung der Randpunktkontur (Randpixelkoordinaten) einer digitalen Bildaufnahme (siehe Abb. 10), die mit Hilfe des neuen Randpunktabfrageprinzips (siehe Abb. 4) erstellt wurde.

Nach Realisierung der Auswertelage (X'', Y''- Koordinaten) kann die Ermittlung der Punkt-Zug-Kurve durchgeführt werden. Dazu sind nachfolgende Operationen notwendig:

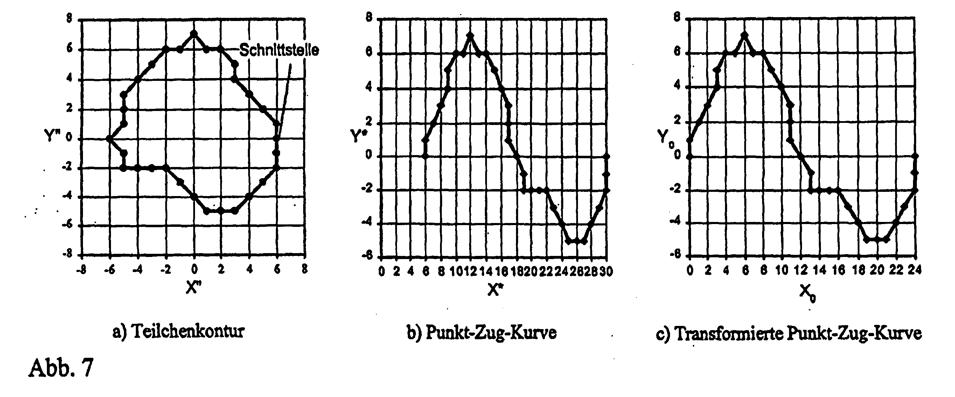

- Schneiden der Partikelrandkontur an einer definierte Stelle (siehe Abb. 7a);
- Ermittlung der X*, Y*-Koordinaten der Punkt-Zug-Kurve (siehe Abb. 7b); und
- Translation des Koordinatensystems in den Startpunkt durch Anwendung der Gleichungen

Abb. 7 veranschaulicht grafisch die Methodik zur Ermittlung der Punkt- Zug- Kurve.

Im Ergebnis erhält man im kartesischen Koordinatensystem eine "Punkt-Zug-Kurve", die mathematisch, z.B. mit Hilfe einer analytischen Funktion, untersucht werden kann. Die erhaltenen Ergebnisse (z.B. in Form von einer Fourierreihe) können in einfachster Weise dann als universelle Informationsträger für die Formbeschreibung weiter bearbeitet werden.

Nachfolgend wird die Anwendungsrelevanz der neuen Kornformbeschreibungsmethodik näher erläutert.

Aus Fachliteratur kann abgeleitet werden, dass am häufigsten die Korrelation zwischen Fourierkoeffizienten und Formfaktoren aus verschiedene Gestaltbereichen (Makro-, Meso- und Mikrogestalt) gesucht wird. Vielfach wurde die Kubizität ($X_a/X_b$- Verhältnis) als Bezugsgröße für die Makrogestalt genutzt. Zur Beschreibung der Mesogestalt verwendet man die Sphärizität. Für die Mikrogestalt existiert gegenwärtig kein praktikabler Formfaktor. Aus diesem Grund wird ein Definitionsvorschlag bezüglich der Mikrogestaltbeschreibung (Rauhigkeit) gegeben. Dieser wird zuerst untersucht und nachfolgend als Bezugsgröße zu Korrelationsbetrachtungen mit den berechneten Fourierkoeffizienten eingeführt.

Zum Hintergrund der Auswertung mit Fourierkoeffizienten bzw. zur Erstellung eines auswertenden Rechenprogramms wird beispielsweise Beddow, J.K.; Meloy, T.P. Advanced Particulate Morphology, CRC Press, Boca Raton, Florida, USA, genannt sowie Beddow, J.K. et al (1977b): On relating some particle profile characteristics to the profile Fourier coefficients, Powder Technology 18 (1977), S. 19 - 25.

Eine Übersicht über die mathematischen Grundlagen geben auch Gl. (5) bis (28) und beigefügte Rechenbeispiel wieder. Nach dieser Art erstellt der Fachmann ausgehend von der Punkt-Zug-Kurve ein auswertendes Rechenprogramm.

Zur Ermittlung der Fourierkoeffizienten eines Teilchens sind vorzugsweise folgende Schritte durchzuführen:

- Aufnehmen eines Bildes und Erzeugen einer Bilddatei;
- Einlesen des Partikelbildes in ein Rechenprogramm und Ermittlung der
- Gesamtanzahl der Teilchen in der Projektionsfläche;
- Durchführung einer Bilderosion und Ermittlung der Randpixelzahl;
- Abtastung der Randkontur und Ermittlung der Randpixelkoordinaten,
- Ermittlung der Abbildungslage des Partikels;
- Ermittlung der Punkt-Zug-Kurve; und
- Auswertung (insbesondere Berechnung der Fourierkoeffizienten mit Hilfe einer Fast-Fouriertransformation) mit Hilfe eines Rechenprogramms.

Zur Untersuchung der Zusammenhänge werden Projektionsbildern von Realpartikeln (Partikelgemische Flint 8/12 mm und Granit 8/12 mm) durchgeführt. Ziel dieser Untersuchungen ist der Anwendungsnachweis des neuen Formbeschreibungsprinzips unter Praxisbedingungen. Ein Methodenvergleich wird mit der bekannten Radius-Winkel-Funktion ebenfalls vorgenommen.

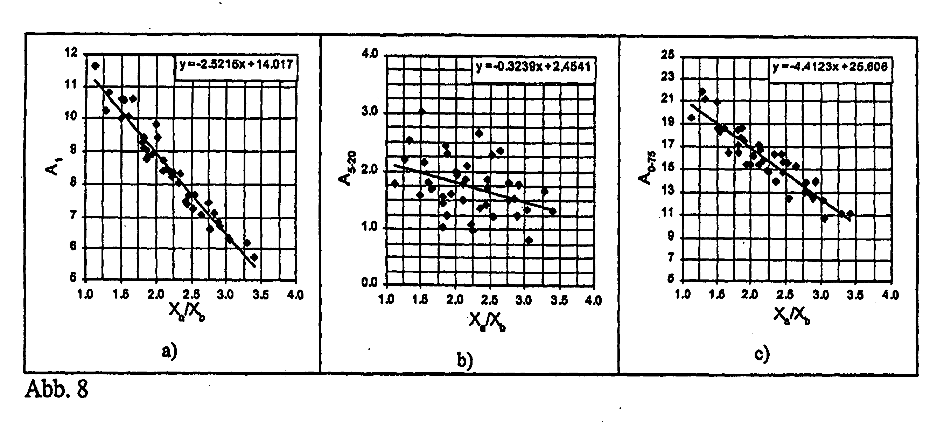

Nach einer Bewertung der Ergebnisse der Korrelationsrechnungen wurde bezüglich des $X_a/X_b$-Verhältnisses festgestellt, dass dieses am Besten mit dem Einzelfourierkoeffizienten $A_1$ korreliert. Abb. 8

Bei der Suche nach einer Korrelation zwischen der Sphärizität und den berechneten Fourierkoeffizienten wurde ein Korrelationszusammenhang zwischen der Sphärizität und den Fourierkoeffizienten niedriger Ordnung (Teilsumme $A_{0-5}$) festgestellt

Ein Vergleich zwischen der nach beiden Berechnungsmethoden bevorzugten Varianten (siehe Tabelle 1 und Abb. 10) zeigt, dass die neue Methode mit besseren Korrelationsparametern und niedrigerer Nachweisempfindlichkeit zu charakterisieren ist.

**Tabelle 1: Vergleich der Korrelationsergebnisse ausgewählter Fourierkoeffizienten, berechnet nach der neuen Methode und der Radius-Winkel-Funktion mit dem $X_a/X_b$-Verhältnis**

| Berechnungsvarianten | 1 | | 2 | | 3 | | 4 | | 5 | |
|---|---|---|---|---|---|---|---|---|---|---|
| Formbeschreibungsmethode | Neu | R-W-F | Neu | R-W-F | Neu | R-W-F | Neu | R-W-F | Neu | R-W-F |
| Fourierkoeffizient | $A_1$ | $A_2$ | $A_{0-5}$ | $A_{0-5}$ | $A_{0-10}$ | $A_{0-10}$ | $A_{0-20}$ | $A_{0-20}$ | $A_{0-75}$ | $A_{0-75}$ |
| Standardabweichung | 0.851 | 0.019 | 0.847 | 0.039 | 0.899 | 0.048 | 0.965 | 0.053 | 1.068 | 0.060 |
| Rel. Standardabweichung [%] | 4.153 | 10.395 | 6.508 | 2.953 | 6.422 | 3.465 | 6.543 | 3.726 | 6.734 | 4.069 |
| Korrelationskoeffizient | 0.9 | 0.957 | 0.934 | 0.906 | 0.933 | 0.906 | 0.927 | 0.899 | 0.921 | 0.888 |
| Steigungskoeffizient | 2.522 | 0.107 | 3.849 | 0.145 | 4.083 | 0.179 | 4.173 | 0.189 | 4.412 | 0.201 |
| Nachweisempfindlichkeit | 0.032 | 0.174 | 0.220 | 0.267 | 0.220 | 0.267 | 0.231 | 0.280 | 0.242 | 0.297 |

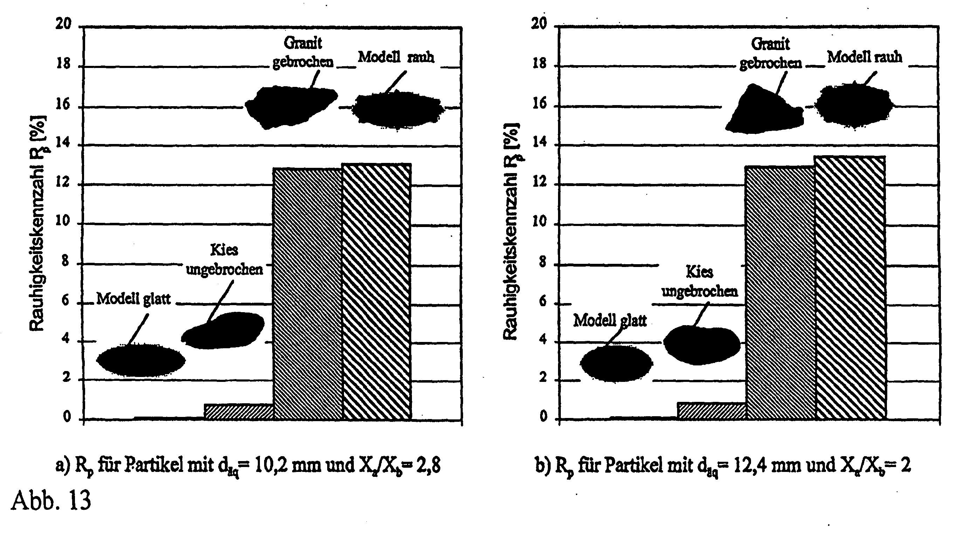

Für den funktionellen Zusammenhang zwischen der Sphärizität und den Fourierkoeffizienten der beiden Methoden sind die charakteristischen Korrelationsparameter in Tabelle 2 zusammengefasst. Eine grafische Darstellung der Vergleichsergebnisse zeigt Abb. 13.

**Tabelle 2: Vergleich der Korrelationsparameter ausgewählter Fourierkoeffizienten, berechnet nach der neue Methode und der Radius-Winkel-Funktion mit der Sphärizität**

| Berechnungsvarianten | 1 | | 2 | | 3 | | 4 | | 5 | |
|---|---|---|---|---|---|---|---|---|---|---|
| Formbeschreibungsmethode | Neu | R-W-F | Neu | R-W-F | Neu | R-W-F | Neu | R-W-F | Neu | R-W-F |
| Fourierkoeffizient | A1 | A2 | A0-5 | A0-5 | A0-10 | A0-10 | A0-20 | A0-20 | A0-75 | A0-75 |
| Standardabweichung | 0.709 | 0.036 | 0.730 | 0.050 | 0.797 | 0.057 | 0.892 | 0.059 | 1.014 | 0.064 |
| Rel. Standardabweichung [%] | 8.389 | 20.139 | 3.610 | 3.785 | 5.692 | 4.110 | 6.050 | 4.163 | 6.394 | 4.391 |
| Korrelationskoeffizient | 0.879 | 0.827 | 0.863 | 0.840 | 0.948 | 0.865 | 0.938 | 0.872 | 0.929 | 0.868 |
| Steigungskoeffizient | 18.523 | 0.747 | 31.843 | 1.091 | 33.676 | 1.386 | 34.286 | 1.490 | 36.141 | 1.597 |
| Nachweisempfindlichkeit | 0.038 | 0.048 | 0.023 | 0.046 | 0.024 | 0.041 | 0.026 | 0.040 | 0.028 | 0.040 |

Die Untersuchungsergebnisse bezüglich der Korrelationsberechnungen zwischen Fourierkoeffizienten und Formfaktoren für die Makro- und Mesogestalt lassen sich folgendermaßen zusammenfassen:

Im Vergleich mit der Radius-Winkel-Funktion weist die neue Methode folgende Vorteile auf:

- Bessere Korrelation mit den ausgewählten Formfaktoren.
- Höhere Messempfindlichkeit (Anstieg der Anpassungsfunktion).
- Höhere Nachweisempfindlichkeit für Formänderungen.

Gemäß des technischen Standes sind für die Mikroformbeschreibung keine geeigneten Kornformfaktoren bekannt, die den neuen Anforderungen der digitalen Aufnahmetechnik genügen. Aus diesem Grund ist es erforderlich, einen Formfaktor für die Rauhigkeit zu entwickeln, der leicht zu berechnen ist und als Bezugsgröße bei den Korrelationsbetrachtungen mit Fourierkoeffizienten verwendet werden kann.

Neben der Entwicklung eines neuen Rauhigkeitsfaktors müssen die Mindestanforderungen an die Aufnahmetechnik (Pixelgröße) definiert werden.

Zur Untersuchung der Rauhigkeitskennzahl und des Einflusses der Pixelgröße auf die Nachweisempfindlichkeit der Rauhigkeitskennzahl werden Modellrechnungen mit Hilfe von selbstkonfigurierten Modellpartikel durchgeführt.

Für die Erfassung der Kantenrauhigkeit wird die Umfangsdifferenz $\Delta U$ zwischen dem Umfang eines rauhen Partikels $U_p$ und eines "glatten" Partikels $U_{glatt}$ mit gleichen Äquivalentdurchmesser $d_{äq}$ und $X_a/X_b$-Verhältnis verwendet.

$$\Delta U = U_p - U_{glatt} \tag{1}$$

$U_p$ - des rauhen Partikels
$U_{glatt}$ - Umfang des glatten Partikels

Durch Normierung von $\Delta U$ (s. Gl. (2) erhält man eine dimensionslose Rauhigkeitskennzahl $R_p$ (s. Gl. (3)).

$$R_p = \left( \frac{U_p - U_{glatt}}{U_{glatt}} \right) * 100 \; [\%] \tag{2}$$

bzw.

$$R_p = \left( \frac{U_p}{U_{glatt}} - 1 \right) * 100 \; [\%] \tag{3}$$

Nach Gl. (2) uns (3) ist die Rauhigkeitskennzahl $R_p$ umso größer, je größer der Umfangsunterschied zwischen einem rauhen und einem glatten Partikel mit gleicher Korngröße $d_{äq}$ und gleichem $X_a/X_b$-Verhältnis ist.

Die Umfangsdifferenz $\Delta U$ hängt aber nicht nur von der Rauhigkeit des Partikels ab, sondern wird auch von der Aufnahmetechnik (Pixelanzahl) beeinflusst. Zur Quantifizierung der Mindestanforderung bezüglich der Anzahl der abzudeckenden Pixel kann der relative Pixelflächenanteil als Verhältnis von Pixelfläche und Projektionsfläche des Realpartikels verwendet werden (s. Gl. (4)).

$$P_r = \frac{P_f}{S_a} = \frac{d_{ak} * d_{bk}}{n_g * d_{ak} * d_{bk}} = \frac{1}{n_g} * 100 \; [\%] \tag{4}$$

Dabei bedeuten:

$P_f$ - Pixelfläche ($P_f = d_{ak} * d_{bk}$)
$S_a$ - Projektionsfläche des Partikels
$n_g$ - Gesamtpixelanzahl im Projektionsbild des Partikels

Je mehr Pixel durch die Projektionsfläche des Partikels abgedeckt werden, umso kleiner ist der relative Pixelflächenanteil (s. Gl. (4)).

Dessen Einfluss auf das Auflösungsvermögen der Rauhigkeitskennzahl $R_p$ soll nachfolgend mit Hilfe von Modellpartikeln näher untersucht werden.

Die Ergebnisse der Durchgeführte Modelluntersuchungen mit vorgegebenen Pixelgrößen (z.B. $0,01 \leq d_{ak} = d_{bk} \leq 0,118$ mm) und berechneten untere Partikelkomgrößen sind in Tabelle 3 zusammengefasst.

Tabelle 3: Zusammenhang zwischen Pixelkantenlänge und unterer Korngrößengrenze für die Mikrogestaltbeschreibung

| Pixelgröße | [mm] | 0,01 | 0,03 | 0,065 | 0,091 | 0,118 |
|---|---|---|---|---|---|---|
| Untere Korngröße $d_{äqr}$ | [mm] | 0,97 | 2,9 | 6,28 | 8,79 | 11,41 |
| Pixelflächenanteil $P_r$ | [%] | 0,0136 | 0,0136 | 0,0136 | 0,0136 | 0,0136 |

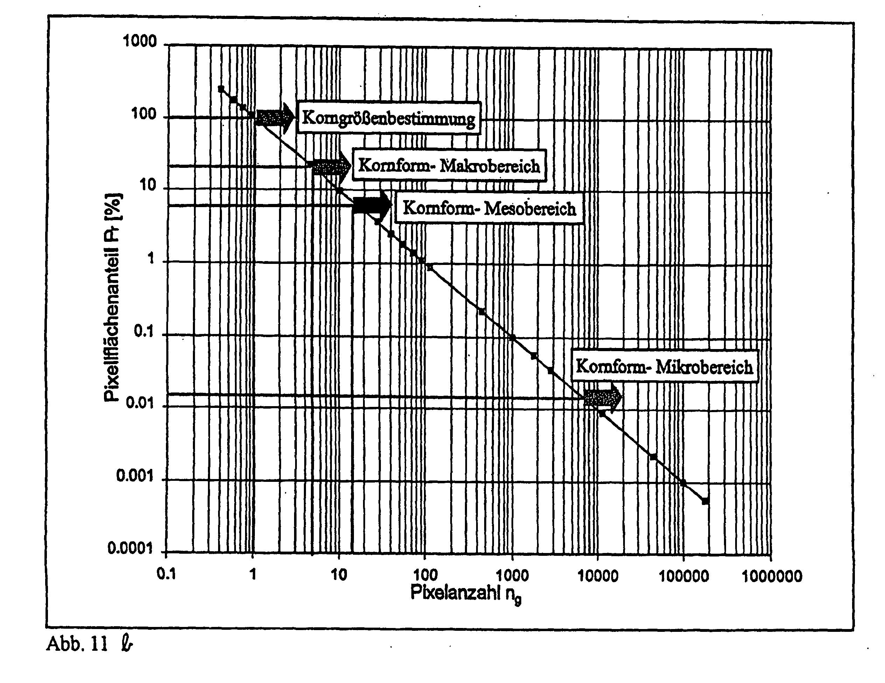

Wird der Pixelflächenanteil $P_r$ gemäß Gl. (4) gebildet, so erhält man für $P_r$ einen konstanten Wert. $P_r$ ist somit eine anwendungsspezifische Kennzahl, die bei Vorgabe der Pixel- bzw. Partikelgröße zur Abschätzung der Anwendbarkeit der Mikrogestaltbeschreibung verwendet werden kann. Eine grafische Darstellung der Zusammenhänge (siehe Tabelle 4) mit Kennzeichnung der praktischen Anwendungsbereiche ist in Abb. 11 dargestellt.

Tabelle 4: Mindestanforderung der Aufnahmetechnik für die Korngrößen- und Komformbestimmung

|  | Korngrößenbestimmung | Kornformbestimmung | | |
|---|---|---|---|---|
|  | Korngröße | Makrobereich | Mesobereich | Mikrobereich |
|  | z.B. Summenverteilung | Elongation $X_a/X_b$ | Sphärizität $\Psi_{sp}$ | Rauhigkeit $R_p$ |
| Pixelanzahl $n_g$ | 1 | 5 | 16 | 7300 |
| Pixelflächenanteil $P_r$ [%] | 70 | 20.0 | 6.25 | 0,0136 |

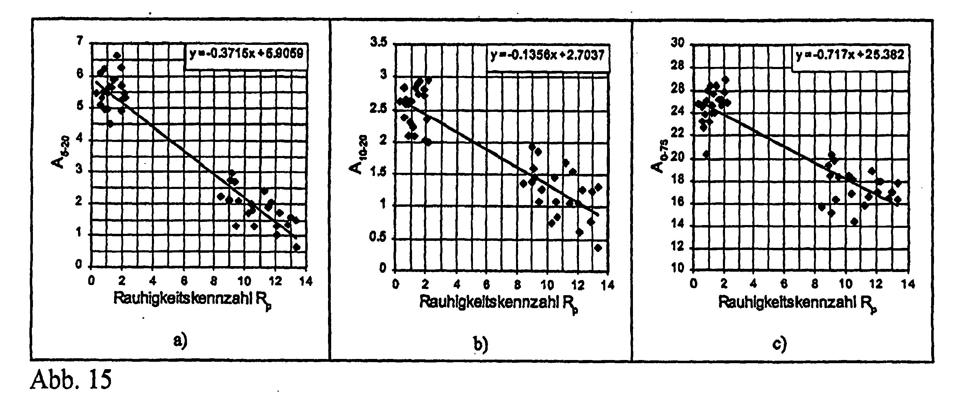

Bei definierten Mindestanforderungen (siehe Tabelle 4 und Abb. 11) und unter Beachtung der Pixelgröße kann die Abhängigkeit zwischen dieser (Pixelkantenlänge $d_{ak} = d_{bk}$) und dem Äquivalentdurchmesser des Partikels $d_{äq}$ abgeleitet werden (siehe Abb. 15).

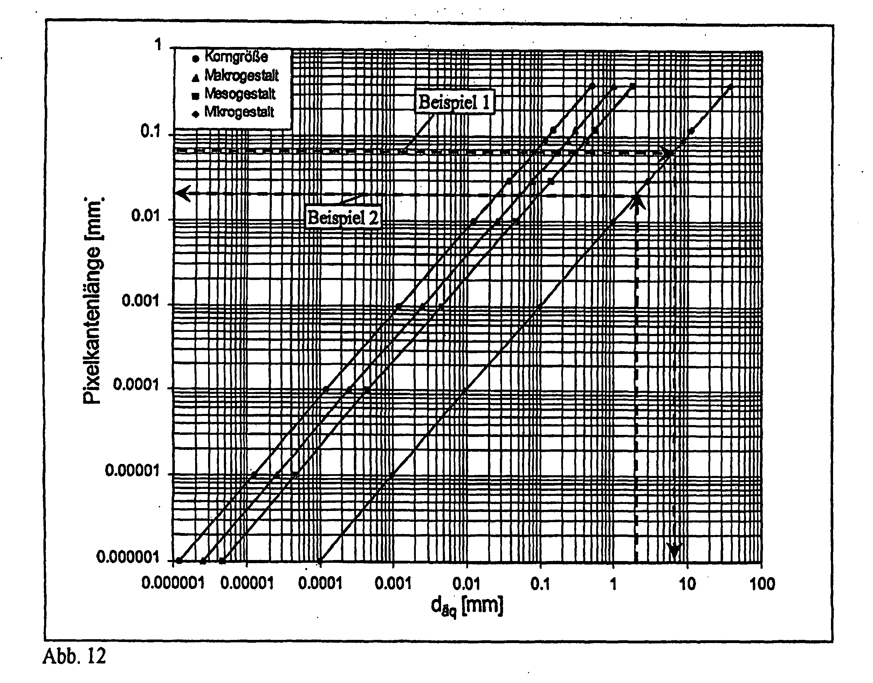

Ablesebeispiel 1 (siehe Abb. 12) geht von einer festgelegten Pixelgröße (Pixelkantenlänge) von 65 $\mu$m aus und zeigt, dass mit dieser Pixelgröße eine Formcharakterisierung im Mikrogestaltbereich für Partikel mit $d_{äq} \geq 6,5$ mm möglich wäre. Ablesebeispiel 2 weist für eine vorgegebene Partikelgröße von $d_{äq} = 2,0$ mm eine erforderliche Mindestpixelgröße $d_{ak} = d_{bk} \leq 20$ $\mu$m für eine Rauhigkeitsbestimmung aus.

Im weiteren werden die dargelegten Mindestanforderungen (Pixelgröße bzw. Partikelgröße), sowie die neue Rauhigkeitskennzahl $R_p$ für die Charakterisierung der Mikrogestalt durch Testrechnungen mit Realpartikeln nachgewiesen.

In dem folgenden Abschnitt werden Berechnungen zur Prognostizierung der Bruchflächigkeit mit Hilfe der neuen Rauhigkeitskennzahl $R_p$ durchgeführt. Dazu werden Projektionsbilder von vollständig gebrochenem Granit bzw. vollständig gerundetem Kies analysiert. Die Korngröße der Partikel lag im Bereich 4 mm $\leq d_{äq} \leq 16$ mm und das $X_a/X_b$-Verhältnis im Bereich $1,3 \leq X_a/X_b- \leq 2,7$. Nachfolgende Aufnahmeparameter werden zur Ermittlung der Projektionsbilder verwendet:

$d_{ak}= d_{bk} = 0,091$ [mm]    Pixelabmessungen (Pixelbreite und -höhe)

$F_k = 9766$ [kHz]    Abtastfrequenz der Kamera

$h_2 = 40$ [mm]    Fallhöhe (Abwurfkante der Transportrinne bis Kameramessebene)

Nach der Bildaufnahme werden aus den Projektionsbildern der aufgenommenen Partikelgemische einzelne Projektionsbilder (ein Partikel je Bild) eliminiert. Diese werden weiter zur Berechnung des Äquivalentdurchmessers $d_{äq}$, des $X_a/X_b$-Verhältnisses, der Sphärizität $\Psi_{sp}$ und Rauhigkeitskennzahl $R_p$ der Partikeln verwendet.

Am Beispiel von Abb. 13 a, b wird aufgezeigt, dass die mit Modellkörpern durchgeführten Berechnungen der Rauhigkeitskennzahl $R_p$ mit den messtechnisch ermittelten Rauhigkeitswerten für beide untersuchte Materialien gut übereinstimmen. Durch die Berechnungen wird somit nachgewiesen, dass sich die vollständig gerundeten (ungebrochene) Körner (Modell- oder Realpartikel) von denen mit rauher Oberfläche (Modell- oder Realpartikel) deutlich unterscheiden. Voraussetzung ist, dass für die vorgegebene Pixelgröße ($d_{ak}= d_{bk} = 0,091$ mm) die untere Grenzkorngröße $d_{äq} \geq 8$ mm (siehe Tabelle 3) eingehalten wird.

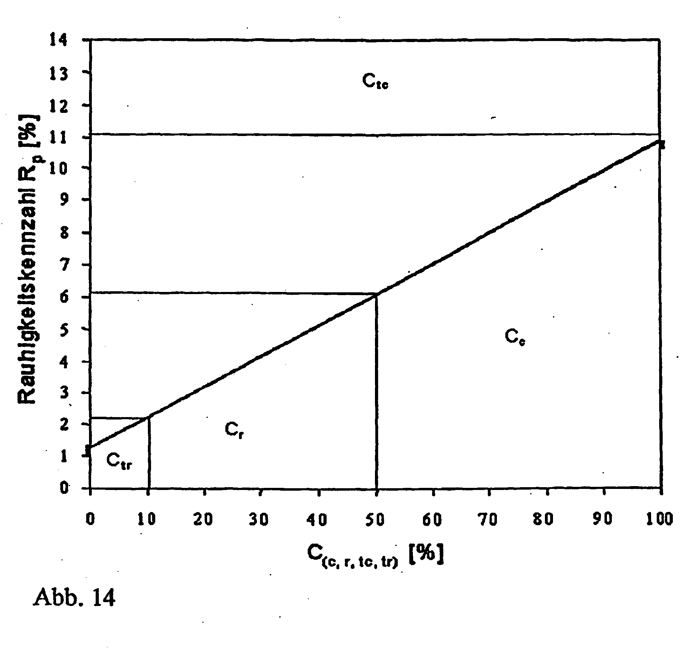

Die so gewonnenen Erkenntnisse lassen sich zur Prognostizierung der Bruchflächigkeit gemäß EN 933, Teil 5 verwenden. In Abb. 14 wird dargestellt, dass sich bestimmte Bereiche der Rauhigkeitskennzahl den in EN, 933 Teil 5 festgelegten Bruchflächigkeitsbereiche zuordnen lassen.

Bedeutung der prozentualen Massenanteile gemäß EN 933, Teil 5:

$C_{tc}$ - vollständig gebrochene Körner (mit 100 % gebrochener Oberfläche)

$C_c$ - gebrochene Körner (mit mehr als 50 % gebrochener Oberfläche)

$C_r$ - ungebrochene Körner (mit weniger als 50 % gebrochener Oberfläche)

$C_{tr}$ - vollständig gerundete Körner (mit mehr als 90 % gerundeter Oberfläche)

Dabei entspricht die Rauhigkeitskennzahl $R_p< 2$ % der Kategorie vollständig gerundeter Körner. Die Rauhigkeitskennzahl im Bereich 2 % $< R_p < 6$ % charakterisiert die Klasse ungebrochener Körner. Der Rauhigkeitsbereich 6

% < $R_p$ < 11 % kennzeichnet die Kategorie der gebrochenen Körner. Alle vollständig gebrochene Körner weisen eine Rauhigkeit $R_p$> 11 % auf. Anhand von Abb. 14 besteht die Möglichkeit eine Rauhigkeitssummenverteilung (Bruchflächigkeitsverteilung) zu entwickeln.

In diesem Teil werden Untersuchungen zur Formbeschreibung im Mikrobereich mit Hilfe von Splittgemischen aus vollständig gebrochenem Granit und vollständig gerundetem Kies durchgeführt. Durch die Ergebnisse der Korrelationsrechnungen zwischen den normierten Fourierkoeffizienten und der Rauhigkeitskennzahl $R_p$ wurde festgestellt, dass die Rauhigkeitskennzahl $R_p$ am Besten mit den Teilsummen der Fourierkoeffizienten $A_{5-10}$ bzw. $A_{5-20}$ korreliert (siehe Abb. 15).

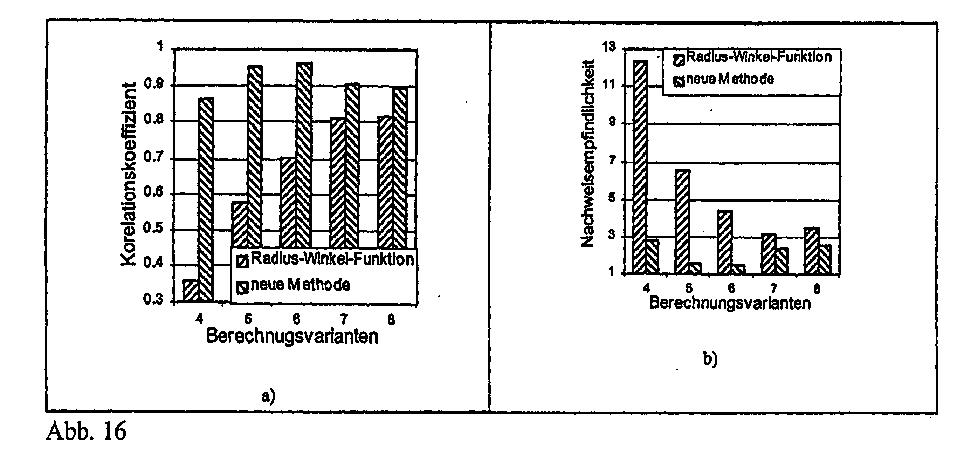

In Tabelle 5 wurden die statistischen Untersuchungsergebnisse aus der neuen Methode bzw. der Radius-Winkel-Funktion bezüglich der Rauhigkeitskennzahl $R_p$ gegenübergestellt. Eine grafische Darstellung der charakteristischen Parameter ist in Abb. 16 zu finden. Ein Vergleich zwischen den besten Berechnungsvarianten aus beiden Methoden zeigt, dass die neue Methode eine bessere Korrelation und Nachweisempfindlichkeit für Rauhigkeitsänderungen besitzt.

**Tabelle 5: Vergleich der statistischen Untersuchungsergebnisse von ausgewählten Fourierkoeffizienten, berechnet nach der neuen Methode und der Radius-Winkel-Funktion mit $R_p$**

| Berechnungsvarianten | 4 | | 5 | | 6 | | 7 | | 8 | |
|---|---|---|---|---|---|---|---|---|---|---|
| Formbeschreibungsmethode | Neu | R-W-F | Neu | R-W-F | Neu | R-W-F | Neu | R-W-F | Neu | R-W-F |
| Fourierkoeffizient | $A_{0-20}$ | $A_{0-20}$ | $A_{5-10}$ | $A_{5-10}$ | $A_{5-20}$ | $A_{5-20}$ | $A_{10-20}$ | $A_{10-20}$ | $A_{20-75}$ | $A_{20-75}$ |
| Standardabweichung | 1.661 | 0.094 | 0.376 | 0.016 | 0.349 | 0.020 | 0.330 | 0.007 | 0.339 | 0.007 |
| Rel. Standardabweichung [%] | 8.659 | 7.314 | 20.941 | 45.139 | 14.569 | 36.377 | 17.435 | 32.802 | 17.643 | 22.491 |
| Korrelationskoeffizient | 0.863 | 0.357 | 0.953 | 0.576 | 0.963 | 0.705 | 0.902 | 0.810 | 0.891 | 0.813 |
| Steigungskoeffizient | 0.587 | 0.008 | 0.236 | 0.002 | 0.222 | 0.005 | 0.136 | 0.002 | 0.131 | 0.002 |
| Nachweisempfindlichkeit | 2.832 | 12.340 | 1.593 | 6.568 | 2.771 | 4.456 | 2.436 | 3.195 | 2.594 | 3.473 |

Die Korrelationsergebnisse lassen sich wie folgt zusammenfassen:

- Die aufsummierten Fourierkoeffizienten höherer Ordnung, berechnet nach der neuen Methode, sind die Hauptinformationsträger der Formbeschreibung im Mikrogestaltbereich

- Normierte Teilsummen von Fourierkoeffizienten $A_{5-10}$ bzw. $A_{5-20}$ (nach der neuen Methode) und $A_{10-20}$ bzw. $A_{20-75}$ (nach der Radius-Winkel-Funktion) korrelieren am Besten mit der Rauhigkeitskennzahl $R_p$.

Im Vergleich mit der Radius-Winkel-Funktion weist die neue Methode folgende Vorteile auf:

- Bessere Korrelation mit der angewandten Rauhigkeitskennzahl $R_p$.
- Höhere Messempfindlichkeit (Anstieg der Anpassungsfunktion).
- Höhere Nachweisempfindlichkeit für Rauhigkeitsänderungen

Abschließend seien noch einige Grundlagen der Fast-Fourier-Transformation zur Ermittlung der Fourierkoeffizienten näher erläutert. Die Ziffern zu den Literaturangaben beziehen sich auf den eingangs genannten Stand der Technik..

Im Jahre 1965 wurde der FFT-Algorithmus (*Fast Fourier-Transformation*) zum ersten Mal veröffentlicht. Die allgemeine mathematischen Form nach *Jahne* [1] lautet:

$$A_w = \sum_{n=-\infty}^{\infty} f(n) * e^{-jwnT} \tag{5}$$

Für praktische Anwendungen (mit einer endlichen Anzahl von Randpunkten) wird diese Beziehung in Gl. (6) überführt.

$$A_w = \sum_{n=0}^{r-1} f(n) * e^{-jwnT} \qquad (6)$$

Dabei bedeuten:

T              - Periodendauer
w             - Wellenanzahlindex, gibt an, wie oft die Periode der Basisfunktion in das Intervall [0, r-1] hineinpasst.
r              - Gesamtanzahl von Stützstellen, die sich aus der Partikelrandkontur ergeben
n = 0....r-1    - Laufindex für die Stützstellen im Ortsbereich.

Die Funktion $A_w$ ist über m periodisch mit der Periode $\omega_0 = 2\pi/T$.
Für eine endliche Anzahl Stützstellen m wird der Wellenanzahlindex w wie folgt berechnet:

$$w_m = 2 * \pi * m * \Delta f \qquad (7)$$

m= 0....r -1     - Laufindex für die Stützstellen im Frequenzbereich

Das Frequenzband $\Delta f$ zwischen zwei Stützstellen kann nach Gl. (8) berechnet werden.

$$\Delta f = \frac{f_0}{r} = \frac{1}{r * T} \qquad (8)$$

$f_0$     - Grundschwingungsfrequenz

Nach Einsetzen von Gl. (8) in Gl. (7) folgt:

$$w_m = 2\pi * \frac{m}{r * T} \qquad (9)$$

Wird Gl. (9) mit Gl. (6) kombiniert, ergibt sich Gl. (10).

$$A_w = \sum_{n=0}^{r-1} f(n) * e^{\frac{-j2\pi mn}{r}} \qquad (10)$$

Ersetzt man in Gl. (10) die Ausdrücke

$$W_r = e^{\frac{-j2\pi}{r}} \qquad (11)$$

und

$$m \cdot n = k, \qquad (12)$$

folgt für die eindimensionale diskrete Fouriertransformation die Gl. (13):

$$A_w = \sum_{n=0}^{r-1} f(n) * W_r{}^k \tag{13}$$

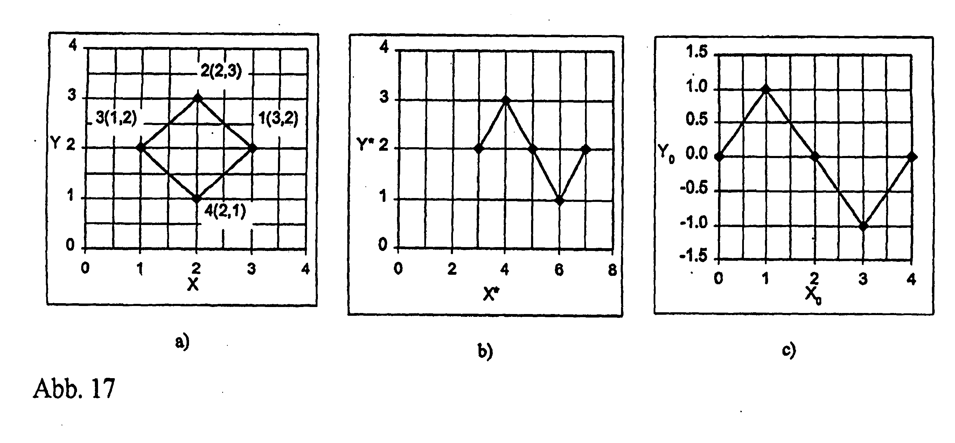

Diese wird für die weiteren Berechnungen verwendet. Nachfolgend soll die Ermittlung der Fourierkoeffizienten aus einer Punkt-Zug-Kurve näher dargestellt werden. Dazu ist in Fig. 17 als Modellfigur ein Rombus mit vier Randpunkten vorgegeben, dessen Fourierkoeffizienten ermittelt werden.

Für jeden Stützpunkt wird mit Hilfe von Gl. (13) die Funktion $A_w$ berechnet, so dass man als Ergebnis nachfolgendes Gleichungssystem zur Berechnung der Fourierkoeffizienten erhält:

$$\begin{aligned}
A(0) &= f_{(0)}W^0 + f_{(1)}W^0 + f_{(2)}W^0 + f_{(3)}W^0 + f_{(4)}W^0 \\
A(1) &= f_{(0)}W^0 + f_{(1)}W^1 + f_{(2)}W^2 + f_{(3)}W^3 + f_{(4)}W^4 \\
A(2) &= f_{(0)}W^0 + f_{(1)}W^2 + f_{(2)}W^4 + f_{(3)}W^6 + f_{(4)}W^8 \\
A(3) &= f_{(0)}W^0 + f_{(1)}W^3 + f_{(2)}W^6 + f_{(3)}W^9 + f_{(4)}W^{12} \\
A(4) &= f_{(0)}W^0 + f_{(1)}W^4 + f_{(2)}W^8 + f_{(3)}W^{12} + f_{(4)}W^{16}
\end{aligned} \tag{14}$$

Dieses lässt sich in einer Matrixform vereinfachen (s. Gl. (15)):

$$\begin{bmatrix} A_0 \\ A_1 \\ A_2 \\ A_3 \\ A_4 \end{bmatrix} = \begin{bmatrix} W^0 & W^0 & W^0 & W^0 & W^0 \\ W^0 & W^1 & W^2 & W^3 & W^4 \\ W^0 & W^2 & W^4 & W^6 & W^8 \\ W^0 & W^3 & W^6 & W^9 & W^{12} \\ W^0 & W^4 & W^8 & W^{12} & W^{16} \end{bmatrix} * \begin{bmatrix} f_{(0)} \\ f_{(1)} \\ f_{(2)} \\ f_{(3)} \\ f_{(4)} \end{bmatrix} \tag{15}$$

Aufgrund der Periodizität auf dem Einheitskreis gilt die Beziehung:

$$W_r{}^k = W^{k \bmod (r)} \tag{16}$$

Das obige Gleichungssystem (s. Gl. (15)) kann dann in die nachfolgende Form (s. Gl. (17)) überführt werden. Zur weiteren Auswertung der Matrize von Gl. (17) sind die komplexen Drehoperatoren $W_k$ (über die Euler-Identität lässt sich diese in Sinus- und Kosinusanteile zerlegen) nach Gl. (18) zu berechnen.

$$\begin{bmatrix} A_0 \\ A_1 \\ A_2 \\ A_3 \\ A_4 \end{bmatrix} = \begin{bmatrix} 1 & 1 & 1 & 1 & 1 \\ 1 & W^1 & W^2 & W^3 & W^4 \\ 1 & W^2 & W^4 & W^1 & W^3 \\ 1 & W^3 & W^1 & W^4 & W^2 \\ 1 & W^4 & W^3 & W^2 & W^1 \end{bmatrix} * \begin{bmatrix} f_{(0)} \\ f_{(1)} \\ f_{(2)} \\ f_{(3)} \\ f_{(4)} \end{bmatrix} \tag{17}$$

$$W^k = e^{\frac{-j2\pi k}{r}} = \cos\left(-\frac{2\pi * k}{r}\right) + j\sin\left(\frac{2\pi * k}{r}\right) \tag{18}$$

Für das angeführte Beispiel ergeben sich die Gleichungen (19) bis (23).

$$W_0 = \frac{\cos 2\pi * 0}{5} - j\sin\frac{2\pi}{5} = 1 - 0 = 1 \tag{19}$$

$$W_1 = \frac{\cos 2\pi * 1}{5} - j\sin\frac{2\pi * 1}{5} = 0,309 - j0,951 \tag{20}$$

$$W_2 = \frac{\cos 2\pi * 2}{5} - j\sin\frac{2\pi * 2}{5} = -0,809 - j0,587 \tag{21}$$

$$W_3 = \frac{\cos 2\pi * 3}{5} - j\sin\frac{2\pi * 3}{5} = -0,809 - j0,587 \tag{22}$$

$$W_4 = \frac{\cos 2\pi * 4}{5} - j\sin\frac{2\pi * 4}{5} = 0,309 + j0,951 \tag{23}$$

Nach Einsetzen in die Matrize von Gl. (17) ergeben sich jetzt die Fourierkoeffizienten für den untersuchten Modellkörper.

$$A_0 = f_0 w^0 + f_1 w^0 + f_2 w^0 + f_3 w^0 + f_4 w^0 = 1 + (-1) = 0 \tag{24}$$

$$A_1 = f_0 w^0 + f_1 w^1 + f_2 w^2 + f_3 w^3 + f_4 w^4 = 1 + (-1) = 0,309 - j0,951 + 0,809 - j0,5877 = 1,118 - j1,5387 \tag{25}$$

$$A_2 = f_0 w^0 + f_1 w^2 + f_2 w^4 + f_3 w^1 + f_4 w^3 = 1 + (-1) = -0,809 - j0,5877 - 0,309 + j0,951 = -1,118 + j0,3633 \tag{26}$$

$$A_3 = f_0 w^0 + f_1 w^3 + f_2 w^1 + f_3 w^4 + f_4 w^2 = 1 + (-1) = -0,809 + j0,5877 - 0,309 - j0,951 = -1,118 - j0,3633 \tag{27}$$

$$A_4 = f_0 w^0 + f_1 w^4 + f_2 w^3 + f_3 w^2 + f_4 w^1 = 1 + (-1) = -0,309 + j0,951 + 0,809 + j0,5877 = 1,118 + j1,5387 \tag{28}$$

Tabelle 6: Darstellung der Fourierkoeffizienten des Rechenbeispiels

| Fourierkoeffizienten | | | |
|---|---|---|---|
| Nr. | $a_m$ | $b_m$ | $A_m = \sqrt{a^2_m + b^2_m}$ |
| $A_0$ | 0 | 0 | 0.000 |

(fortgesetzt)

| Fourierkoeffizienten | | | |
|---|---|---|---|
| Nr. | $a_m$ | $b_m$ | $A_m = \sqrt{a^2{}_m + b^2{}_m}$ |
| $A_1$ | 1,118 | -1,5387 | 1.902 |
| $A_2$ | -1,118 | 0,3633 | 1.176 |
| $A_3$ | -1,118 | -0,3633 | 1.176 |
| $A_4$ | 1,118 | 1,5388 | 1.902 |

Eine Darstellung der berechneten Fourierkoeffizienten (mit ihrem realen $a_m$ und imaginären Teil $b_m$) ist in Tabelle 6 dargestellt.

Die Approximation der Punkt-Zug-Kurve kann aus den zuvor berechneten Fourierkoeffizienten durch Rücktransformation (s. Gl. (29)) erfolgen [1, S.60-70; 2].

$$f(n) = \sum_{w=0}^{r-1} A_w * W_r^{-k} \qquad (29)$$

**Patentansprüche**

1. Verfahren zur Beschreibung der Kornform von Partikeln mittels digitaler Bildaufnahmetechnik, mit folgenden Schritten:

   - mittels einer Digitalkamera wird ein Bild eines Partikel- bzw. Komstroms aufgenommen und als digitalisierte Bilddatei zwischengespeichert,
   - aus der Bilddatei wird für das zu beschreibende Partikel mittels einer Datenverarbeitungseinrichtung eine digitalisierte Projektionsfläche erzeugt,
   - die Projektionsfläche wird durch Flächenerosion in Flächenpixel und Randpixel getrennt,
   - nach einer Festlegung eines Startpunktes und einer Abtastrichtung werden die Randpixel in x;y- Koordinaten überführt,
   - die x;y Koordinaten der Randpixel werden in eine Auswertelage gebracht und dann weiterführend durch eine Randkonturabwicklung in eine Punkt- Zug- Kurve überführt; wozu

      - die Randkontur an einer definierten Stelle geschnitten wird,
      - X*,Y*-Koordinaten der Punkt-Zug-Kurve ermittelt werden und
      - eine Koordinatensystemtranslation in der Startpunkt erfolgt; und

   - zur Auswertung der Punkt-Zugkurve mit Hilfe einer analytischen Transformation Lösungskoeffizienten ermittelt werden.

2. Verfahren nach, Anspruch 1, **dadurch gekennzeichnet, dass** die analytische Transformation eine Fourieranalyse ist.

3. Verfahren nach Anspruch 1 oder 2, **dadurch gekennzeichnet, dass** normierte Lösungskoeffizienten ausgewertet werden, um in Abhängigkeit von ihrer Ordnungszahl Aufschluss über Makro- Meso- und Mikrogestalt zu geben.

4. Verfahren nach Anspruch 3, **dadurch gekennzeichnet, dass** aus einem Koeffizient der 1. Ordnung die Makrogestalt bestimmt wird.

5. Verfahren nach einem der vorstehenden Ansprüche, **dadurch gekennzeichnet, dass** die Ermittlung bzw. Bestimmung der Makrogestalt durch ein Länge/Breiten- Verhältnis erfolgt, wobei abnehmende 1. Koeffizienten auf ein größeres Länge/ Breite Verhältnis hindeuten.

**6.** Verfahren nach einem der vorstehenden Ansprüche, **dadurch gekennzeichnet, dass** aus aufsummierten Koeffizienten der 0. - 5. Ordnung die Mesogestalt bestimmt wird.

**7.** Verfahren nach einem der vorstehenden Ansprüche, **dadurch gekennzeichnet, dass** eine Bestimmung der Mesogestalt durch die Sphärizität erfolgt, wobei abnehmende Werte der aufsummierten Koeffizienten der 0. bis 5. Ordnung auf asphärischere Partikel hindeutet.

**8.** Verfahren nach einem der vorstehenden Ansprüche, **dadurch gekennzeichnet, dass** aus aufsummierten Koeffizienten der 5.- 16. Ordnung oder mehr die Mikrogestalt bestimmt wird.

**9.** Verfahren nach einem der vorstehenden Ansprüche, **dadurch gekennzeichnet, dass** aus aufsummierten Koeffizienten der 5.- 20. Ordnung die Mikrogestalt bestimmt wird.

**10.** Verfahren nach einem der vorstehenden Ansprüche, **dadurch gekennzeichnet, dass** die Charakterisierung der Mikrogestalt durch eine Rauhigkeitskennzahl $R_p$ erfolgt, die sich aus dem Verhältnis des Umfanges der realen Projektionsfläche und des Umfanges einer definierten Fläche gleichen Flächeninhaltes und gleicher Länge/Breite berechnet, wobei abnehmende Werte der aufsummierten Koeffizienten der 5. bis 20. Ordnung auf größere Rauhigkeiten hindeutet.

**Claims**

**1.** Method for describing the grain shape of particles by means of digital image recording technology, comprising the following steps:

- an image of a particle or grain stream is recorded by means of a digital camera and buffered as a digitised image file;
- a digitised projection surface is generated from the image file for the particle to be described by means of a data processing device;
- the projection surface is separated into surface pixels and edge pixels by surface erosion;
- following the definition of a starting point and a scanning direction, the edge pixels are converted into X-Y co-ordinates;
- the X-Y co-ordinates of the edge pixels are fed into an evaluation system and then converted into a line graph, for which purpose

- the edge contour is intersected at a defined point;
- X*-Y* co-ordinates of the line graph are determined; and
- the co-ordinate system is translated into the starting point; and

- solution coefficients are determined by means of an analytical transformation to evaluate the line graph.

**2.** Method according to claim 1, **characterised in that** the analytical transformation is a Fourier analysis.

**3.** Method according to claim 1 or 2, **characterised in that** normalised solution coefficients are evaluated in order to gain information on macro-, meso- and micro-shape in dependence on their ordinal number.

**4.** Method according to claim 3, **characterised in that** the macro-shape is determined from a coefficient of the 1st order.

**5.** Method according to any of the preceding claims, **characterised in that** the determination of the macro-shape is based on a length/width ratio, decreasing 1st coefficients indicating a higher length/width ratio.

**6.** Method according to any of the preceding claims, **characterised in that** the meso-shape is determined from summed coefficients of the 0th to 5th order.

**7.** Method according to any of the preceding claims, **characterised in that** the meso-shape is determined from sphericity, decreasing values of the summed coefficients of the 0th to 5th order indicating more aspherical particles.

8. Method according to any of the preceding claims, **characterised in that** the micro-shape is determined from summed coefficients of the 5$^{th}$ to 16$^{th}$ order or higher.

9. Method according to any of the preceding claims, **characterised in that** the micro-shape is determined from summed coefficients of the 5$^{th}$ to 20$^{th}$ order.

10. Method according to any of the preceding claims, **characterised in that** the micro-shape is **characterised by** a roughness characteristic $R_p$ calculated from the ratio of the circumference of the real projection surface and the circumference of a defined area of the same surface area and the same length/width, decreasing values of the summed coefficients of the 5$^{th}$ to 20$^{th}$ order indicating greater roughness values.

**Revendications**

1. Procédé en vue de la description de la structure granuleuse de particules au moyen de la technique de prise de vue numérique, avec les étapes suivantes :

   - au moyen d'une caméra numérique, une particule et/ou un courant de grains est photographié(e) et enregistré(e) temporairement comme donnée d'image numérique,
   - à partir des données d'image, une surface de projection numérique est produite pour la particule à décrire au moyen d'un équipement de traitement de données,
   - la surface de projection est séparée par érosion surfacique en pixels de surface et en pixels de bord,
   - après fixation d'un point de départ et d'une direction de balayage, les pixels de bord sont convertis en coordonnées x, y,
   - les coordonnées x, y des pixels de bord sont amenées dans une position d'évaluation et ensuite convertis en sus par une projection développée de contour de bord en une courbe de traction de points ;

      - - le contour de bord étant coupé à un endroit défini,
      - - les coordonnées X*, Y* de la courbe de traction de points étant déterminées et
      - - une translation du système de coordonnées ayant lieu au point de départ ; et

   - des coefficients de solution sont déterminés en vue de l'évaluation de la courbe de traction de points à l'aide d'une transformation analytique.

2. Procédé selon la revendication 1, **caractérisé en ce que** la transformation analytique est une analyse de Fourier.

3. Procédé selon la revendication 1 ou 2, **caractérisé en ce que** les coefficients de solution normés sont évalués pour pouvoir donner, en fonction de leur indice d'ordre, des informations sur les profils macro, méso et micro.

4. Procédé selon la revendication 3, **caractérisé en ce que** le profil macro est déterminé à partir d'un coefficient de 1$^{er}$ ordre.

5. Procédé selon l'une quelconque des revendications précédentes, **caractérisé en ce que** l'évaluation et/ou la détermination du profil macro se fait par un rapport longueur/largeur, des coefficients de 1$^{er}$ ordre décroissants indiquant un plus grand rapport longueur/largeur.

6. Procédé selon l'une quelconque des revendications précédentes, **caractérisé en ce que** le profil méso est déterminé à partir des coefficients cumulés d'ordre 0-5.

7. Procédé selon l'une quelconque des revendications précédentes, **caractérisé en ce qu'**une détermination du profil méso se fait par la sphéricité, des valeurs décroissantes des coefficients cumulés d'ordre 0 à 5 indiquant des particules asphériques.

8. Procédé selon l'une quelconque des revendications précédentes, **caractérisé en ce que** le profil micro est déterminé à partir des coefficients cumulés d'ordre 5-16 on plus.

9. Procédé selon l'une quelconque des revendications précédentes, **caractérisé en ce que** le profil micro est déterminé à partir des coefficients cumulés d'ordre 5-20.

10. Procédé selon l'une quelconque des revendications précédentes, **caractérisé en ce que** la caractérisation du profil micro se fait par un indice de rugosité $R_p$, qui se calcule à partir du rapport du pourtour de la surface de projection réelle et du pourtour d'une surface définie du même contenu de surface et de la même longueur/largeur, des valeurs décroissantes des coefficients cumulés d'ordre 5 à 20 indiquant des rugosités plus fortes.

| Grenztyp | Abfragerichtungen | Beispiel |
|---|---|---|
| 1. Grenztyp- 4<br><br>Vorteile: Einfache Logistik,<br>     bessere Formbeschreibung,<br>     weniger Speicherplatzbedarf<br><br>Einfache Abfragelogistik | | Speicherplatzbedarf -31 Randpunkte |
| 2. Grenztyp- 8<br><br>Nachteile: schlechtere Formbeschreibung,<br>     größerer Speicherplatzbedarf<br>     Komplizierte Abfragelogistik<br><br>Komplizierte Abfragelogistik | | Speicherplatzbedarf- 49 Randpunkte |

Abb. 1

EP 1 696 223 B1

Abb. 2

Abb. 3

EP 1 696 223 B1

Randkontur des Partikels   Startpunkt

8-Punkt-Abfrage-schleife

Hilfsmatrix

Teilchenkontur mit definierten
Randpixelkoordinaten (X, Y)

| Koordinaten der Randpixel | | |
|---|---|---|
| Nr. | X | Y |
| 1 | 14 | 8 |
| 2 | 13 | 9 |
| 3 | 12 | 10 |
| 4 | 11 | 11 |
| 5 | 11 | 12 |
| ......... | ......... | ......... |
| ......... | ......... | ......... |
| 30 | 14 | 6 |
| 31 | 14 | 7 |

Abb. 4

α = 30°

Schwerpunkt

a) statistische Abbildungslage

α = 0°

X'ₐ

b) gedrehte Auswertelage

Abb. 5

EP 1 696 223 B1

Abb. 6

22

a) Teilchenkontur   b) Punkt-Zug-Kurve   c) Transformierte Punkt-Zug-Kurve

Abb. 7

Abb. 8

Abb. 9

Abb. 10.

Abb. 11a

Abb. 11 𝓵

Abb. 12

Model rauh

Granit gebrochen

Kies ungebrochen

Model glatt

Rauhigkeitskennzahl $R_p$ [%]

20  18  16  14  12  10  8  6  4  2  0

b) $R_p$ für Partikel mit $d_{äq} = 12{,}4$ mm und $X_z/X_b = 2$

Model rauh

Granit gebrochen

Kies ungebrochen

Model glatt

Rauhigkeitskennzahl $R_p$ [%]

20  18  16  14  12  10  8  6  4  2  0

a) $R_p$ für Partikel mit $d_{äq} = 10{,}2$ mm und $X_z/X_b = 2{,}8$

Abb. 13

Abb. 14

Abb. 15

a)

b)

Abb. 16

EP 1 696 223 B1

a)

b)

c)

Abb. 17

EP 1 696 223 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4119240 C2
- US 5321764 A
- US 20041797737 A1


**In der Beschreibung aufgeführte Nicht-Patentliteratur**

- **JAHNE B.** Handbook of digital image processing for scientific applications. CRC Press, 1997
- **HULLER, D.** Quantitative Formanalyse von Partikeln. *Dissertation Technische Hochschule,* 1984
- Prüfverfahren für geometrische Eigenschaften von Gesteinskörnungen: Bestimmung der Kornform- Kornformkennzahl. *NORM EN 933,* Dezember 1999
- Prüfverfahren für geometrische Eigenschaften von Gesteinskörnungen: Bestimmung des prozentualen Anteils von gebrochenen Körnern in groben Gesteinskörnungen. *NORM EN 933,* Februar 1998
- **BEDDOW, J.K. ; MELOY, T.P. ; BEDDOW, J.K. et al.** Advanced Particulate Morphology. CRC Press, 1977
- *Powder Technology,* 1977, vol. 18, 19-25